# EUROPEAN PATENT SPECIFICATION

(11) **EP 1 437 904 B1**
(45) Date of publication and mention of the grant of the patent: **13.02.2008**
(21) Application number: 03258205.8
(22) Date of filing: 23.12.2003
(51) Int. Cl.: H04Q 7/32

(54) **Email configuration through an SMS message**
Emailkonfigurierung durch eine SMS-Kurznachricht
Configuration de couriel à l'aide d'un message court SMS

(30) Priority: 13.01.2003 US 341512
(43) Date of publication of application: 14.07.2004
(73) Proprietor: Hewlett-Packard Development Company, L.P., Houston, Texas 77070 (US)
(72) Inventor: Biundo, Marc C., Vancouver Wa 98682 (US)
(74) Representative: Jackson, Richard Eric

(56) References cited:
- EP-A- 1 017 210
- EP-A- 1 220 555
- EP-A- 1 235 287
- US-A- 6 134 433

## Description

### TECHNICAL FIELD

The present disclosure relates to cellular phone printing, and more particularly, configuring cellular phones to print electronic mail (e-mail) messages and e-mail attachments.

### BACKGROUND

Mobile or cellular phones (cellular phones) increasingly are becoming smaller in size and continue to provide greater features that increase user productivity. In addition to providing voice communication, many cellular phones are enabled to provide text messaging services, such as multimedia messaging services (MMS). More important to many users, certain cellular phones provide the ability to receive and send electronic mail (e-mail) messages that typically are sent to and received through a personal computer, computer workstation, another cellular telephone or the like.

E-mail messages can range from short one or two sentence text messages to long and sometimes complicated document-like messages. In certain cases, graphics may be included in an e-mail message. A cellular phone receiving an e-mail message is usually able to only process the text of the e-mail message. The relatively small display screen size limits the ability of a user to read relatively long e-mail messages.

E-mail attachments are files that are included with e-mail messages. E-mail attachment files can only be opened by specific application programs that are resident on the receiving device. Typically, receiving devices of e-mail attachments are personal computers (PC) in the form of desktops and laptops, and computer workstations. PCs and workstations have the requisite storage resources to host application programs, the requisite processing capability to open and manipulate e-mail attachments, and sufficient power or battery capacity to effectively run the application programs.

Cellular phones by contrast provide limited storage to host the requisite application programs to open and use e-mail attachments. In addition cellular phone microprocessors perform limited operations and are not as powerful as microprocessors in PCs and workstations in processing resident application programs.

Memory or storage resources in a cellular phone are also limited compared to memory resources in a PC or workstation. Application programs typically require greater memory resources than that provided by cellular phones.

Finally, running application programs, particularly applications programs that perform continuous multiple operations, are taxing on power (i.e., battery) resources. Cellular phones' battery resources are ineffective to run most application programs for a sufficient operating time.

Although, the display screens of cellular phones continue to grow in size; providing greater pixel resolution, and providing more colors, compared to a PC display, the smaller display screens of cellular phones are inadequate to properly display many full length e-mail messages and e-mail attachments. Further, even though resolution and colors continue to be increased in cellular phone display screens, cellular phone screens still lack the resolution and colors provided by PC display screens.

Accordingly, this invention arose out of concerns associated with providing the ability to allow a user to print out and view full length PC oriented e-mail messages and e-mail attachments that are received by a cellular phone.

EP-A1-1235387 discloses a wireless mobile device that connects via a short-range interface to an office device and transmits calls received over a radio communications network to the office device. The calls may be data calls, including email messages and the office device can be a printer. EP-A1-1235387 also discloses automatic forwarding of the calls to the office device in the radio communications network.

### SUMMARY

Methods and systems for configuring a cellular phone to print e-mail messages and e-mail attachments to a printer are described. In an embodiment, a cellular phone receives an indication that an e-mail message is available, and stored in a mail server. The cellular phone is configured to receive e-mail from the mail server. The cellular phone is also configured to direct printing to a particular printer and direct the mail server to send the e-mail message to the particular printer for printing.

In certain embodiments, an information technology center provides and keeps track of the cellular phone's e-mail configuration settings that include information regarding the particular mail server, and printer configuration information.

Certain embodiments allow the cellular phone to automatically configure the appropriate memory locations according to receive e-mail and printing configuration settings, while other embodiments provide that the user copy the configuration settings to the appropriate memory locations.

### BRIEF DESCRIPTION OF THE DRAWINGS

The same reference numbers are used throughout the drawings to reference like components and features.

Fig. 1 is a block diagram illustrating an exemplary environment for cellular phones to receive e-mail messages and e-mail attachments, and send e-mail messages.

Fig. 2 is a block diagram illustrating an exemplary cellular phone architecture suitable for implementing various methods that configure the cellular phone to print e-mail messages and e-mail attachments.

Fig. 3 is a block diagram illustrating an exemplary environment for passing messages to a cellular phone.

Fig. 4 is a block diagram illustrating an exemplary network that allows a cellular phone to print to a printer or printing device.

Fig. 5 is a flowchart illustrating an exemplary method of configuring a cellular phone to print to particular printers, receive e-mail from particular servers, and send e-mail to particular servers.

### DETAILED DESCRIPTION

### Exemplary E-mail Network

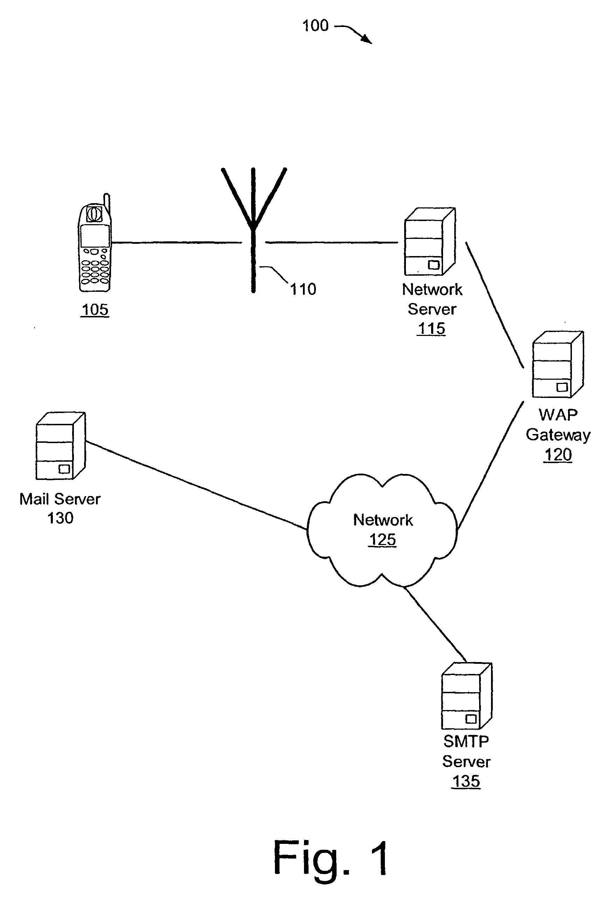

Fig. 1 shows an exemplary environment 100 for cellular phones to receive e-mail messages and attachments, and send e-mail messages. Environment 100 includes a cellular phone 105 that is configured through hardware, software, or a combination to receive and send e-mail messages. Cellular phone 105 connects to a cellular base station 110. Messages are received and sent through radio frequency (RF) signals by cellular phone 105 and cellular base station 110. Cellular base station 110 connects through a land line, wireless connection, or a combination to a network server 115. Cellular base station 110 may be connected to network server 115 through a land line, wireless connection, or a combination. Network server 115 is connected through a land line, wireless connection, or a combination to a wireless access protocol (WAP) gateway 120. Cellular phone 105 must be properly configured through hardware, software, or a combination with appropriate settings to access the correct WAP gateway computer 120. The WAP gateway computer 120 is connected to a network 125 that may include the Internet, intranets, and local area networks (LANs). Network 125 may be considered as an e-mail portal for cellular phone 105.

Network 125 connects through a land line, wireless connection, or a combination to a mail server 130. Mail server 130 may be configured to use one or more protocols such as post office protocol 3 (POP3) or Internet message access protocol (IMAP). Mail server 130 may be identified by a name and a port number. E-mail messages that are destined to cellular phone 105 are stored in mail server 130. E-mail messages destined for cellular phone 105 may be sent to mail server 130 by way of network 125 and/or other networks. Cellular phone 105 may receive a portion or entire e-mail messages by sending requests by way of WAP gateway 120 to mail server 130. Cellular phone 105 may also request through WAP gateway 120 that e-mail messages be deleted from mail server 130.

Network 125 connects through a land line, wireless connection, or a combination to simple mail transfer protocol (SMTP) server 135. SMTP server 135 may be identified by a name and a port number. When cellular phone 105 sends e-mail messages, the e-mail messages are sent through WAP gateway computer 120 and network 125, and eventually arrive at SMTP server 135. SMTP server 135 delivers the e-mail messages either through network 125 or other networks, where the e-mail messages are received by the appropriate mail servers that may include mail server 130.

In an example operating scenario, cellular phone 105 receives an indication from WAP gateway computer 120 that e-mail messages and attachments have been sent to SMTP server 135. Cellular phone 105 does not receive the actual e-mail messages and attachments, but keeps the e-mail messages and attachments stored in SMTP server 135, until cellular phone 105 instructs SMTP server to perform an action such as printing, forwarding, and/or deleting the e-mail messages and attachments.

### Exemplary Cellular Phone Architecture

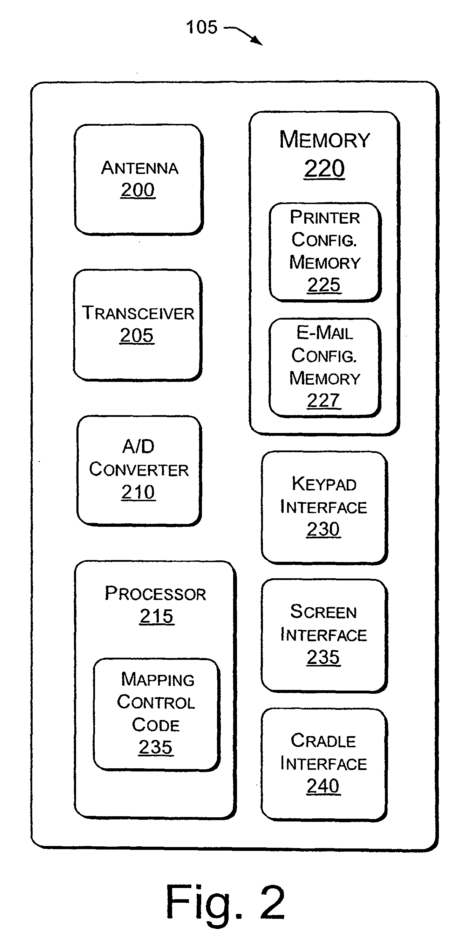

Fig. 2 shows an exemplary architecture for cellular phone 105. The exemplary architecture of cellular phone 105 may implement one of various cellular phone protocols and networks including analog and digital networks, and may employ one or various standards such as time division multiple access (TDMA), code division multiple access (CDMA), and global system for mobile communication (GSM).

The architecture of cellular phone 105 includes an antenna 200 that receives and transmits RF signals from cellular base station 110. Antenna 200 is coupled to a transceiver 205 that is configured to receive and transmit messages in the form of RF signals. RF messages received by transceiver 205 are sent to and processed by analog to digital (A/D) converter 210. A/D converter 210 converts the RF signal messages to digital information and provides the digital information to processor 215. A/D converter 210 may provide compressing and recompression of the digital information to save bandwidth space in transmission. Processor 215 is configured through hardware, software, or a combination to handle information received from A/D converter 210 and coordinate such information and other information with input/output devices that are part of cellular phone 105 such as a speaker, keyboard (keys), an amplifier, or the like.

Processor 215 interfaces with cellular phone memory 220. Memory 220 may include information such as saved contact information (e.g., addresses, phone numbers, and e-mail addresses). Memory 220 may also include stored text and/or graphic messages. Memory 220 may include dedicated sections of memory, in this example printer configuration memory 225 and e-mail configuration memory 227. Parameters describing a particular printer are stored in printer configuration memory 225. Parameters describing particular printers include printer address and printer location. Parameters describing a particular mail server from which e-mail messages are received, and a particular SMTP server to which e-mail messages are sent, are stored in e-mail configuration memory 227. Parameters describing particular servers include server name and server port number. Processor 215 may change printer configuration memory 225 and e-mail configuration memory 227 through one of various methods, including direct user intervention and receipt of a message containing configuration information. Processor 215 further includes mapping control code 229. Automatic configuration may be performed by the mapping control code 229 that maps the configuration settings to memory locations 225 and 227 of memory 220.

The architecture of cellular phone 105 further includes various interfaces. The architecture of cellular phone 105 may include a keypad interface 230 that interfaces to a keypad or keys; a screen interface 235 that interfaces to a display screen; and a cradle interface 240 that interfaces to an external device such as a cradle. The cradle in turn can interface to a computing device such as a PC, and/or a software download device such as an optical disk drive or floppy disk drive that allows software to be transferred to cellular phone 105, in particular downloaded to memory 220. Alternatively, software may also be downloaded to memory 220 through receipt by transceiver 205, and processing by A/D converter 210 and processor 215.

Memory 220 may be one of various computer readable media that includes random access memories (RAMS) and read only memories (ROM), however it should be appreciated by those skilled in the art that other types of computer readable media which can store data that is accessible by a computer, such as magnetic cassettes, flash memory cards, digital video disks and the like, may also be used.

### Exemplary Message Network Environment

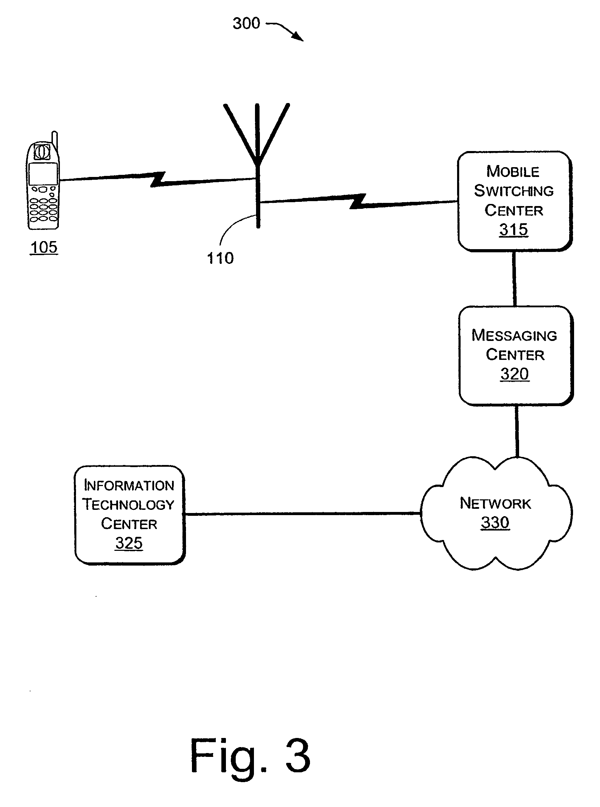

Fig. 3 shows an exemplary environment for passing messages to cellular phone 105. Messages may include configuration messages to modify printer settings and e-mail serving settings.

Cellular phone 105 is part of a cellular phone network 300. Cellular phone network 300 may include or may be part of environment 100. Cellular phone network 300 may include numerous cellular base stations that receive and transmit RF signal messages, such as cellular base station 110. Cellular phone network 300 further includes a mobile switching center 315 which determines the location of cellular phone 105 and the location of the nearest cellular base station to cellular phone 105. Messaging center 320 is operatively connected to mobile switching center 315. Messaging center 320 receives and stores messages (e.g., text) that are made available on the cellular phone network 300. The messages that are sent are particularly referred to as short message service (SMS) messages.

An information technology (IT) center 325 may be connected to messaging center 320 by a network 330. IT center 325 may include a computer and/or a network of computers. Cellular phone 105 may be part of an enterprise network that includes other cellular phones, personal digital assistants (PDA), laptop PCs, desktop PCs, and other similar devices. IT center 325 and administrators of IT center 325 may be responsible for properly configuring the devices of the enterprise network so that they are able to receive and send e-mail, and also are able to forward and print e-mail to printing devices.

IT center 325 can send an SMS message to modify cellular phone 105 e-mail configurations that allow cellular phone to receive from and send e-mail messages to particular servers that support printers with e-mail connectivity. SMS messages describing e-mail configurations may include the following:
1) Data and WAP gateway settings
2) Mail server (e.g., POP3) name
3) Mail server (e.g., POP3) port number
4) Mail box name
5) Password (e.g., user password required to access e-mail account)
6) SMTP Server Name
7) SMTP Port number
8) Printer E-mail address (i.e., the address known to others in which e-mail is sent to the cellular phone)
9) "From" field that describes where received email came from; and other miscellaneous optional fields including "subject" field, "date" field, and "size" field.

Network 330 includes wide area networks (WANs), wireless area networks, and the Internet. An example operating scenario provides for the IT center 325 to send a message (e.g., SMS message) through network 330 to messaging center 320 where the message is stored. Alternatively, IT center 325 may also send out a wireless message that is transmitted and picked up by a base station, such as cellular base station 110, then passed on to messaging center 320 through mobile switching center 315. IT center 325 may be part of a corporate wide network that configures and tracks devices such as cellular phone 105.

Configuration of cellular phone 105 may include printer configurations that allow cellular phone 105 to print to various printers and printing devices. Printing configurations include printers' locations and addresses. It is contemplated that IT center 325 may be a service provider that provides cellular phone users various services, including the option to print to particular printers by providing the necessary printer addresses and locations. An example of such a service provider is a service that allows cellular phone users to print from "public" printers at locations, such as airports, coffee houses, and public buildings. An example operating scenario provides that a cellular phone user contact IT center 325 and IT center 325 determines the location of cellular phone 105 and the nearest printers, then provides cell phone 105 with the necessary printer addresses and locations to print to the particular printer(s).

In an embodiment, IT center 325 determines where cellular phone 105 is through the cellular phone network 300, in particular through mobile switching center 315, and determines the location of available printers and/or networks to which cellular phone 105 can connect. Locations of printers and/or networks may be obtained by IT center 325 through a database maintained by IT center 325. IT center 325 provides cellular phone 105 with the printing locations and addresses that allows cellular phone 105 to print to the available printers. Cellular phone 105, in turn, configures itself with the provided information to print to the available printers.

IT center 325 may employ one or various computers that include computer readable media such as a hard disk, a removable magnetic disk and a removable optical disk, however, it should be appreciated by those skilled in the art that other types of computer readable media which can store data that is accessible by a computer, such as magnetic cassettes, flash memory cards, digital video disks, random access memories (RAMS) read only memories (ROM), and the like, may also be used.

### Exemplary Printing Environment

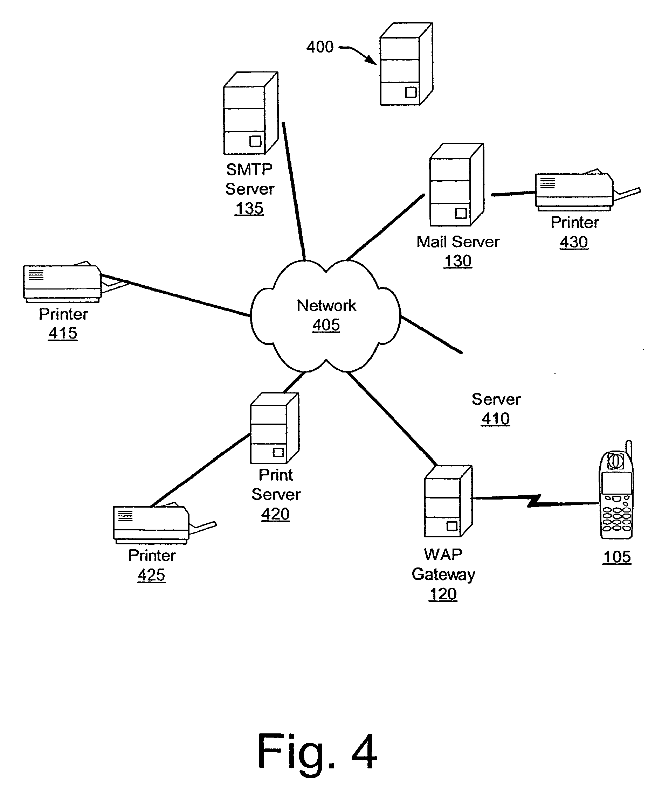

Fig. 4 shows an exemplary network system 400 that allows cellular phone 105 to print to a printer or printing device. In particular network system 400 allows e-mail messages and e-mail attachments that are sent to cellular phone 105 to be printed. Cellular phone 105 is part of network system 400. In an embodiment, cellular phone 105 connects to the network system 400 by way of WAP gateway 120. In other embodiments, another gateway computer may be used in place of WAP gateway 120, where the gateway computer is configured to receive RF communication from cellular phone 105. Alternatively, a wireless access point, such as devices defined by IEEE 802.11 may be used to connect cellular phone 105 to network 405. Through WAP gateway computer 120, or similar access point, cellular phone 105 directs SMTP server 135 to send selected e-mail messages and e-mail attachments to be printed on a selected printer(s) or printing devices. The e-mail messages and e-mail attachments may be intermediately sent to a server prior to being sent to a printer or printing device.

Network 405 may include network 125 (Fig. 1), and intra-corporate networks. Network 405 may also include the Internet. Further, corporate firewall systems and computers may be placed between corporate networks and external networks such as the Internet. Network 405 may also include one or more of several types of hardwired and wireless networks, including wireless area networks, wide area networks, local area networks, and personal area networks.

A server 410 receives and stores messages (e.g., e-mail messages), data files (e.g., e-mail attachments), and other communications. In addition, server 410 transmits messages, data files, and communications through network 405. An example operating scenario has server 410 receiving a message such as an e-mail message from cellular phone 105, storing the message, then forwarding the message through network 405 for printing on a printer such as printer 415. Server 410 is configured to receive and process e-mail messages and e-mail attachments, configuring such e-mail messages and e-mail attachments for printing to selected printer(s). In particular, server 410 converts such e-mail messages and e-mail attachments to the requisite printer device language and formatting, prior to submitting a print job to the selected printer.

Network 405 is configured through a land line, a wireless connection, or a combination with print server 420. Print server 420 receives print jobs such as e-mail messages and e-mail attachments and queues the print jobs for printer 425. Print server 420 is similarly configured as server 410 to receive and process e-mail messages and e-mail attachments for printing to selected printer(s). Print server 420 converts such e-mail messages and e-mail attachments to the requisite printer device language and formatting, prior to submitting a print job to the selected printer.

Network 405 is configured with a land line, a wireless connection, or a combination to mail server 130 and SMTP server 135. A printer 430 is directly connected to SMTP server 135. With mail server 130 connected to a printer or printers such as printer 430, cellular phone 105 is able to send an instruction through WAP gateway 120, to SMTP server 135, instructing SMTP server 135 to print an e-mail message(s) and/or e-mail attachment(s) to a printer such as printer 430. Any server, including mail server 130 and SMTP server 135 that provides print jobs to printers must be configured to convert e-mail messages and e-mail attachments to the requisite printer device language and formatting, as described above.

It is contemplated that cellular phone 105 through IT center 325, as illustrated in Fig. 3, will be configured with the proper settings to the appropriate gateway computer (access point), and servers. Further it is contemplated that IT center 325 through mobile switching center 315, is able to track the location of cellular phone 105 and determine the nearest and most applicable printer to print from. Servers 130, 135, and 410 will have the necessary application programs to open e-mail messages and e-mail attachments, which may be printed out for the cellular phone user. The user of cellular phone 105 may direct e-mail messages and/or e-mail attachments stored at particular servers such as mail server 130, SMTP server 135, and server 140, to be sent for printing at printer such as printers 415, 425, and 430. It is contemplated that the cellular phone 105 connect to WAP gateway 120 to provide the necessary instruction to send the e-mail and/or e-mail attachments for printing.

Printers 415, 425, and 430 may include devices such as laser-based printers, ink-based printers, dot matrix printers, dry medium printers, plotters and the like. In addition, printers 415, 425, and 430 might also include various multi-function peripheral (MFP) devices that combine a printing function with other functions such as facsimile transmission, scanning, copying and the like. Printers 415, 425, and 430 may include specific e-mail addresses.

### Exemplary Method

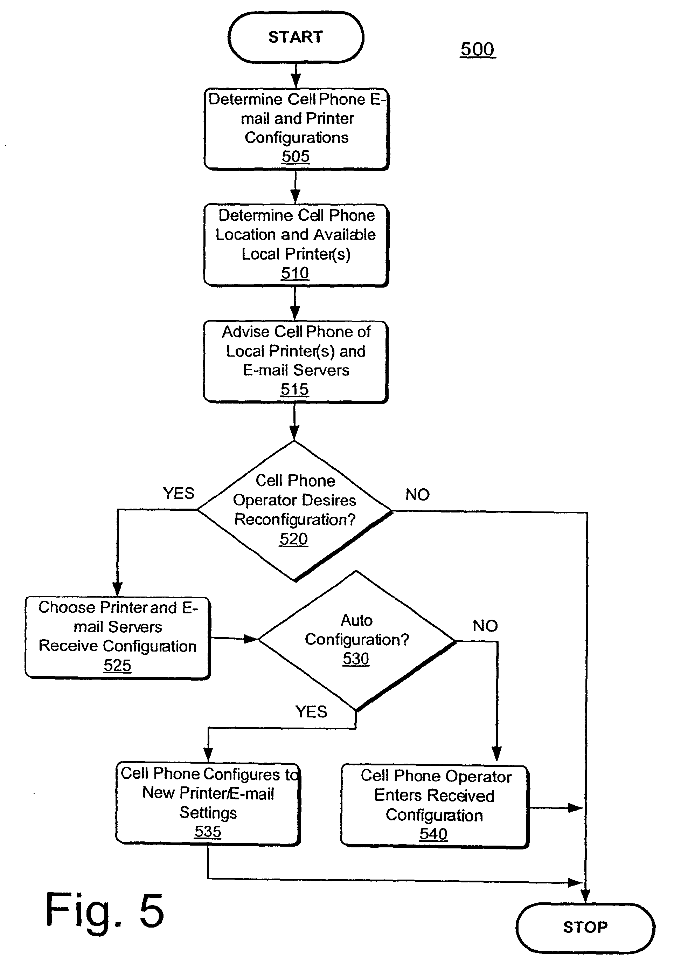

Fig. 5 is a flowchart illustrating configuring a cellular phone to print to particular printers, receive e-mail from particular servers, and send e-mail to particular servers.

At block 505, the cellular phone determines its e-mail and printer configuration settings. As described earlier, the cellular phone may be configured for certain e-mail settings that include access to a particular mail server and an SMTP server. In addition, a cellular phone may be configured to print to a certain printer or printers. Printer configuration may include one of several necessary fields or attributes that are needed to print to particular printers. These fields or attributes include "printer name," "printer address," "printer location," "printer e-mail address" and other unique printer feature fields or attributes. In certain cases, the cellular phone may not need to change e-mail and/or printer configurations.

At block 510, an IT center, through a mobile switching center, may be able to determine where the cellular phone is located. Knowing where the cellular phone is located, the IT center can determine local networks that allow the cellular phone to print to particular printer(s) located on the local network. In addition, particular SMTP servers and/or mail servers may be more appropriate for the cellular phone. The IT center will have the necessary e-mail and printer configuration settings to provide to the cellular phone to allow the cellular phone to connect to the local network and to print to the printer(s) and/or connect to appropriate servers.

At block 515, the IT center may proactively advise the cellular phone that a network is available that allows the cellular phone to print. Further, mail and SMTP servers may be available for the cellular phone. Alternatively, the cellular phone user may contact the IT center with an initial inquiry as to the availability of networks, printers, and servers in the area.

At block 520, a determination is made as to whether the cellular phone user desires to reconfigure the printer and e-mail settings of the cellular phone. In certain situations, there is not a need or a desire to reconfigure the cellular phone. These situations include transitory visits to a network by the cellular phone. In particular, transitory visits where the user does not need to print or check e-mail messages. In these cases, the current printer and e-mail configurations of the cellular phone are kept and not changed.

At block 525, if the cellular phone user desires to print to a local printer and/or reconfigure e-mail settings, the cellular phone user advises the IT center. The network that the user connects to may have several printers and servers available. Therefore, in order to print to a particular printer; receive mail from a particular mail server; and/or send mail to a SMTP particular server, the cellular phone user chooses a printer, and maybe printers, to print from; a server to receive mail from; and a SMTP server to send mail to. The IT center provides a message that contains configuration information to modify the cellular phone to receive and send e-mail, and print to one or more printers. Alternatively, the IT center may proactively determine that the cellular phone must change configuration and performs the configuration changes.

At block 530, a determination is made if the cellular phone is set up for automatic configuration to change printer and/or e-mail configuration settings. Cellular phones may receive printer and/or e-mail configuration in the form of text messages (e.g. SMS messages). The text messages provide parameters to fill particular memory locations (e.g. printer configuration memory and e-mail configuration memory), and the memory locations in turn define printer and e-mail configurations.

For certain cellular phones, either through software or hardware, memory locations are automatically updated with the parameters when a user desires to change printer and/or e-mail configuration. The user merely accepts the printer configuration changes and the parameters are added to the appropriate fields. At block 535, the cellular phone automatically configures to the new configuration settings. Automatic configuration may be performed by mapping control code 229 shown in Fig. 1 that maps the configuration settings to memories 225 and 227 of memory 220.

If a cellular phone is not equipped with software or hardware that automatically enters printer and/or e-mail configuration parameters, a user may copy the text messages into the appropriate memory locations. A user merely selects the appropriate parameter information from the text message, copies it, and then pastes it in the appropriate field, as illustrated by block 540. This avoids the need to retype the configurations using the small keys of the cellular phone.

Although details of specific implementations and embodiments are described above, such details are intended to satisfy statutory disclosure obligations rather than to limit the scope of the following claims. Thus, the invention as defined by the claims is not limited to the specific features described above. Rather, the invention is claimed in any of its forms or modifications that fall within the proper scope of the appended claims.

## Claims

1. A cellular phone (105)for communicating over a Cellular network comprising:
a transceiver (205) adapted to receive an indication that an e-mail message is available and adapted to receive printer configuration information for a printer which is connected to a computer network in the vicinity of the cellular phone, the computer network being connected to the cellular network;
a memory (220, 225, 230) adapted to store the printer configuration information; and
a processor (215) coupled to the memory to configure the cellular phone to direct printing of the e-mail message to the printer across the cellular network and computer network using the printer configuration information.

2. The cellular phone of claim 1 wherein e-mail configuration settings are sent to the transceiver and the memory is further adapted to store the e-mail configuration settings.

3. The cellular phone of claim 2 wherein the e-mail configuration settings arc sent by a short message service (320).

4. The cellular phone of claim 1 wherein the printer configuration information is sent to the transceiver.

5. The cellular phone of claim 1 wherein the e-mail message comprises an e-mail attachment, the e-mail attachment being sent to the printer for printing.

6. A system comprising:
a cellular phone for communicating over a cellular network and configured to receive an indication of an e-mail message and configured to receive printer configuration information for a printer which is connected to a computer network in the vicinity of the cellular phone, the computer network being connected to the cellular network; and
a server (135) connected to the computer network and configured to receive the e-mail message,
wherein the server is further configured to send the e-mail message across the computer network to the printer for printing as directed by the printer configuration received from the cellular phone.

7. A method comprising:
transmitting printer configuration information for a printer connected to a cellular network to a cellular phone connected to a computer network in the vicinity of the cellular phone, the computer network being connected to the cellular network;
storing an e-mail message at a server;
receiving an indication of the e-mail message at a cellular phone; and
directing the server, with the cellular phone using the printer configuration information, to transmit the e-mail message across the computer network to the printer for printing.

8. The method of claim 7 wherein the e-mail message comprises an e-mail attachment, and the e-mail attachment is sent to the printer for printing.

9. The method of claim 7 wherein the e-mail configuration settings comprise wireless access protocol server settings; mail server name; mail server port number; mail box name; e-mail password; short message transfer protocol (SMTP) server name; SMTP port number; and printer e-mail address.

## Patentansprüche

1. Ein zellulares Telefon (105) zum Kommunizieren über ein zellulares Netz, das folgende Merkmale aufweist:
ein Sende/Empfangsgerät (205), das angepasst ist, um eine Anzeige zu empfangen, dass eine E-Mail-Nachricht verfügbar ist, und angepasst ist, um Druckerkonfigurationsinformationen für einen Drucker zu empfangen, der mit einem Computernetz in der Nähe des zellularen Telefons verbunden ist, wobei das Computernetz mit dem zellularen Netz verbunden ist;
einen Speicher (220, 225, 230), der angepasst ist, um die Druckerkonfigurationsinformationen zu speichern; und
einen Prozessor (215), der mit dem Speicher gekoppelt ist, um das zellulare Telefon zu konfigurieren, über das zellulare Netz und das Computernetz unter Verwendung der Druckerkonfigurationsinformationen anzuordnen, dass der Drucker die E-Mail-Nachricht druckt.

2. Das zellulare Telefon gemäß Anspruch 1, bei dem die E-Mail-Konfigurationseinstellungen an das Sende/Empfangsgerät gesendet werden und der Speicher ferner angepasst ist, um die E-Mail-Konfigurationseinstellungen zu speichern.

3. Das zellulare Telefon gemäß Anspruch 2, bei dem die E-Mail-Konfigurationseinstellungen durch einen Kurznachrichtendienst (320) gesendet werden.

4. Das zellulare Telefon gemäß Anspruch 1, bei dem die Druckerkonfigurationsinformationen an das Sende/Empfangsgerät gesendet werden.

5. Das zellulare Telefon gemäß Anspruch 1, bei dem die E-Mail-Nachricht einen E-Mail-Anhang aufweist, wobei der E-Mail-Anhang zum Drucken an den Drucker gesendet wird.

6. Ein System, das folgende Merkmale aufweist:
ein zellulares Telefon zum Kommunizieren über ein zellulares Netz, das konfiguriert ist, um eine Anzeige einer E-Mail-Nachricht zu empfangen, und konfiguriert ist, um Druckerkonfigurationsinformationen für einen Drucker zu empfangen, der mit einem Computernetz in der Nähe des zellularen Telefons verbunden ist, wobei das Computernetz mit dem zellularen Netz verbunden ist; und
einen Server (135), der mit dem Computernetz verbunden ist und konfiguriert ist, um die E-Mail-Nachricht zu empfangen,
wobei der Server ferner konfiguriert ist, um die E-Mail-Nachricht zum Drucken über das Computernetz an den Drucker zu senden, wie es durch die Druckerkonfiguration, die von dem zellularen Telefon empfangen wird, angeordnet ist.

7. Ein Verfahren, das folgende Schritte aufweist:
Übertragen von Druckerkonfigurationsinformationen für einen Drucker, der mit einem zellularen Netz verbunden ist, an ein zellulares Telefon, das mit einem Computernetz in der Nähe des zellularen Telefons verbunden ist, wobei das Computernetz mit dem zellularen Netz verbunden ist;
Speichern einer E-Mail-Nachricht an einem Server;
Empfangen einer Anzeige der E-Mail-Nachricht an einem zellularen Telefon; und
Anordnen, mit dem zellularen Telefon unter Verwendung der Druckerkonfigurationsinformationen, dass der Server die E-Mail-Nachricht über das Computernetz an den Drucker zum Drucken überträgt.

8. Das Verfahren gemäß Anspruch 7, bei dem die E-Mail-Nachricht einen E-Mail-Anhang aufweist und der E-Mail-Anhang zum Drucken an den Drucker gesendet wird.

9. Das Verfahren gemäß Anspruch 7, bei dem die E-Mail-Konfigurationseinstellungen Drahtloszugriff-Protokoll-Server-Einstellungen; einen Mail-Servernamen; eine Mailserver-Portzahl; einen Mailboxnamen; ein E-Mail-Passwort; einen Kurznachrichtübertragungsprotokollservernamen (SMTP-Servernamen); eine SMTP-Portzahl; und eine Drucker-E-Mail-Adresse aufweisen.

## Revendications

1. Téléphone cellulaire (105) destiné à communiquer sur un réseau cellulaire comprenant :
■ un émetteur-récepteur (205) adapté afin de recevoir une indication du fait qu'un message de courrier électronique est disponible et adapté afin de recevoir des informations de configuration d'imprimante pour une imprimante qui est connectée à un réseau d'ordinateurs à proximité du téléphone cellulaire, le réseau d'ordinateurs étant connecté au réseau cellulaire ;
■ une mémoire (220, 225, 230) adaptée afin de stocker les informations de configuration d'imprimante ; et
■ un dispositif de traitement (215) couplé à la mémoire pour configurer le téléphone cellulaire afin d'ordonner une impression du message de courrier électronique à l'imprimante sur le réseau cellulaire et le réseau d'ordinateur en utilisant les informations de configuration d'imprimante.

2. Téléphone cellulaire selon la revendication 1, dans lequel les réglages de configuration de courrier électronique sont envoyés à l'émetteur-récepteur et la mémoire est en outre adaptée afin de stocker les réglages de configuration de courrier électronique.

3. Téléphone cellulaire selon la revendication 2, dans lequel les réglages de configuration de courrier électronique sont envoyés par un service de messages courts (320).

4. Téléphone cellulaire selon la revendication 1, dans lequel les informations de configuration d'imprimante sont envoyées à l'émetteur-récepteur.

5. Téléphone cellulaire selon la revendication 1, dans lequel le message de courrier électronique comprend un fichier joint de courrier électronique envoyé à l'imprimante pour une impression.

6. Système comprenant :
■ un téléphone cellulaire destiné à communiquer sur un réseau cellulaire et configuré afin de recevoir une indication d'un message de courrier électronique et configuré afin de recevoir des informations de configuration d'imprimante pour une imprimante qui est connectée à un réseau d'ordinateurs à proximité du téléphone cellulaire, le réseau d'ordinateurs étant connecté au réseau cellulaire ; et
■ un serveur (135) connecté au réseau d'ordinateurs et configuré afin de recevoir le message de courrier électronique,
dans lequel le serveur est en outre configuré afin d'envoyer le message de courrier électronique sur le réseau d'ordinateurs à l'imprimante pour une impression, tel qu'ordonné par la configuration d'imprimante reçue en provenance du téléphone cellulaire.

7. Procédé comprenant les étapes consistant à :
■ transmettre des informations de configuration d'imprimante pour une imprimante connectée à un réseau cellulaire à un téléphone cellulaire connecté à un réseau d'ordinateurs à proximité du téléphone cellulaire, le réseau d'ordinateurs étant connecté au réseau cellulaire ;
■ stocker un message de courrier électronique au niveau d'un serveur ;
■ recevoir une indication du message de courrier électronique au niveau d'un téléphone cellulaire ; et
■ ordonner au serveur, avec le téléphone cellulaire utilisant les informations de configuration d'imprimante, de transmettre le message de courrier électronique sur le réseau d'ordinateurs à l'imprimante pour une impression.

8. Procédé selon la revendication 7, dans lequel le message de courrier électronique comprend un fichier joint de courrier électronique et le fichier joint de courrier électronique est envoyé à l'imprimante pour une impression.

9. Procédé selon la revendication 7, dans lequel les réglages de configuration de courrier électronique comprennent dès réglages sur serveur d'un protocole d'accès sans fil ; un nom de serveur de courrier ; un numéro de port de serveur de courrier ; un nom de boîte de courrier ; un mot de passe de courrier électronique ; un nom de serveur à protocole SMTP (short message transfer protocol : protocole de transfert de messages courts) ; un numéro de port SMTP ; et une adresse de courrier électronique d'imprimante.
